# EUROPÄISCHE PATENTSCHRIFT

(11) **EP 3 077 690 B1**
(45) Veröffentlichungstag und Bekanntmachung des Hinweises auf die Patenterteilung: **06.09.2017**
(21) Anmeldenummer: 14793114.1
(22) Anmeldetag: 03.11.2014
(51) Int. Cl.: F16D 23/12, F16D 28/00, F16H 25/18

(54) **VORRICHTUNG ZUM BETÄTIGEN EINES HYDRAULIKKOLBENS FÜR EINE ELEKTRISCH BETÄTIGBARE KUPPLUNG EINES KRAFTFAHRZEUGS**
DEVICE FOR ACTUATING A HYDRAULIC PISTON FOR AN ELECTRICALLY ACTUATABLE CLUTCH OF A MOTOR VEHICLE
DISPOSITIF POUR ACTIONNER UN VÉRIN HYDRAULIQUE D'UN EMBRAYAGE À COMMANDE ÉLECTRIQUE DE VÉHICULE À MOTEUR

(30) Priorität: 04.12.2013 DE 102013224805
(43) Veröffentlichungstag der Anmeldung: 12.10.2016
(73) Patentinhaber: Robert Bosch GmbH, 70442 Stuttgart (DE)
(72) Erfinder: GERUNDT, Oliver, 71292 Friolzheim (DE); FEIGL, Markus, 71706 Markgroeningen (DE); DREWE, Ingo, 77815 Buehl (DE)
(86) Internationale Anmeldenummer: PCT/EP2014/073595
(87) Internationale Veröffentlichungsnummer: WO 2015/082148

(56) Entgegenhaltungen:
- WO-A1-2007/034208
- DE-A1-102011 102 103

## Beschreibung

### Gebiet der Erfindung

Die vorliegende Erfindung betrifft eine Vorrichtung zum Betätigen eines Hydraulikkolbens für eine elektrisch betätigbare Kupplung sowie eine elektrisch betätigbare Kupplung für ein Kraftfahrzeug.

### Stand der Technik

Bei Kraftfahrzeugen mit handgeschalteten Getrieben wird derzeit eine Kraftübertragung zwischen einem Motor des Kraftfahrzeugs und dem Getriebe während eines Schaltvorgangs im Allgemeinen mithilfe einer Kupplung temporär unterbrochen. Hierzu werden in heutigen Fahrzeugen meist hydraulisch betätigte Kupplungen eingesetzt. Bei diesen wird eine von einem Fahrer durch Niedertreten eines Kupplungspedals ausgeübte Kraft auf einen Geberzylinder geleitet. Dieser Geberzylinder ist Teil eines Hydrauliksystems, das die auf den Geberzylinder ausgeübte Kraft hydraulisch an einen Nehmerzylinder weiter leitet. Der Nehmerzylinder betätigt letztendlich einen Ausrücker der Kupplung, wodurch die Kupplung zwischen einem eingekoppelten und einem ausgekoppelten Zustand und umgekehrt verlagert werden kann.

Derzeit werden elektrisch betätigbare Kupplungen entwickelt, bei denen das Kupplungspedal nicht mehr direkt mechanisch mit dem Geberzylinder der Hydraulik gekoppelt ist. Stattdessen wird eine Betätigung des Kupplungspedals mittels eines Sensors erfasst und basierend auf Signalen dieses Sensors ein Elektromotor angesteuert, mithilfe dessen dann der Geberzylinder geeignet kraftbeaufschlagt wird.
Solche elektrisch betätigbaren Kupplungssysteme können verschiedene Vorteile bieten.
Beispielsweise ist ein Halten des Kupplungspedals, insbesondere eine vom Fahrer erfahrbare Rückstellkraft auf das Kupplungspedal, nicht mehr zwingend von einer von der Kupplung bewirkten Rückstellkraft vorgegeben. Unterschiedliche Kraftverläufe an dem Kupplungspedal können weitgehend unabhängig vom aktuellen Betätigungsstatus der Kupplung bewirkt werden.

Insbesondere kann eine solche elektrisch betätigbare Kupplung auch betätigt werden, ohne dass der Fahrer dies durch Niedertreten des Kupplungspedals gezielt auslöst oder steuert. Beispielsweise kann auf diese Weise mithilfe eines Steuergeräts durch gezieltes Ansteuern der elektrisch betätigbaren Kupplung ein sanftes, ruckelfreies Anfahren, insbesondere ein Anfahren am Berg, gesteuert werden.
Bei einer alternativen Anwendung kann ein so genanntes Segeln des Kraftfahrzeugs gesteuert werden. Dabei kann in Fahrsituationen, in denen das Fahrzeug nicht vom Motor angetrieben werden braucht, gezielt ausgekuppelt werden. Das Fahrzeug kann dann beispielsweise treibstoffsparend ausrollen, wobei gegebenenfalls der Verbrennungsmotor zeitweise ausgeschaltet werden kann.
Aus der WO 2007/034208 A1 ist eine Vorrichtung zum Betätigen eines Hydraulikkolbens für eine elektrisch betätigbare Kupplung gemäß dem Oberbegriff des Anspruchs 1 bekannt.

### Offenbarung der Erfindung

Ausführungsformen der Erfindung ermöglichen in vorteilhafter Weise, einen linear betätigbaren Geberzylinder eines Kupplungshydrauliksystems mithilfe eines Elektromotors zu betätigen.
Gemäß einem Aspekt der vorliegenden Erfindung wird eine Vorrichtung zum Betätigen eines Hydraulikkolbens für eine elektrisch betätigbare Kupplung vorgeschlagen. Die Vorrichtung weist einen Elektromotor und eine Kraftübertragungsanordnung auf. Die Kraftübertragungsanordnung ist dazu ausgelegt, eine von dem Elektromotor bewirkte Kraft als linear wirkende Kraft zum Betätigen des Hydraulikkolbens zu übertragen. Die vorgeschlagene Vorrichtung zeichnet sich dadurch aus, dass die Kraftübertragungsanordnung ein Antriebsradsegment und eine Führungsanordnung aufweist. Das Antriebsradsegment weist eine an dessen Umfang angeordnete Zahnung auf. Das Antriebsradsegment ist drehbar um einen ersten Bolzen gelagert. Außerdem weist das Antriebsradsegment, z.B. an einem Hebelarm exzentrisch zu dem ersten Bolzen angeordnet, einen zu dem ersten Bolzen beabstandeten zweiten Bolzen auf. Die Führungsanordnung weist zumindest ein erstes und zumindest ein zweites Langloch auf. Die beiden Langlöcher sind zueinander rechtwinklig angeordnet. Der erste Bolzen ist hierbei in dem ersten Langloch geführt und der zweite Bolzen ist in dem zweiten Langloch geführt, derart, dass sich die Führungsanordnung bei Drehen des Antriebsradsegments linear verlagert.

Ideen zu Ausführungsformen der vorliegenden Erfindung können unter anderem als auf den nachfolgend beschriebenen Gedanken und Erkenntnissen beruhend angesehen werden:
Mithilfe der hierin vorgeschlagenen Vorrichtung soll ein Hydraulikkolben, über den in einem Hydrauliksystem eine Kraft auf eine Kupplung übertragen werden kann, von einem Elektromotor betätigt werden. Der Elektromotor stellt eine Kraft im Allgemeinen mithilfe einer sich drehenden Welle, das heißt als Drehmoment, bereit. Der Hydraulikkolben sollte möglichst mit einer linear wirkenden Kraft betätigt werden, wobei die Betätigungsrichtung mit der Verlagerungsrichtung des Hydraulikkolbens innerhalb eines Hydraulikzylinders möglichst genau übereinstimmen sollte.

Um das von dem Elektromotor bereit gestellte Drehmoment in eine linear wirkende Kraft zum Betätigen des Hydraulikkolbens umzuwandeln, wird ein spezieller Mechanismus vorgeschlagen. Ein Antriebsradsegment, das von dem Motor beispielsweise mithilfe eines Zahnrads oder einer Schnecke angetrieben werden kann, weist an seinem Außenumfang eine mit dem Zahnrad beziehungsweise der Schnecke zusammenwirkende Zahnung auf. Das Antriebsradsegment ist an einem ersten Bolzen drehbar gelagert, das heißt, kann sich um den ersten Bolzen herum drehen. Ferner weist das Antriebsradsegment einen zweiten Bolzen auf, der zu dem ersten Bolzen beabstandet ist und somit exzentrisch angeordnet ist. Ein solcher exzentrisch angeordneter zweiter Bolzen kann als an einem Hebelarm angeordnet angesehen werden. Das heißt, wenn das Antriebsradsegment um den ersten Bolzen herum gedreht wird, wird der zweite Bolzen entlang einer Kreisbahn verlagert.

Um die drehende Bewegung des Antriebsradsegments nun in eine lineare Bewegung umwandelt zu können, wird eine hierin als Führungsanordnung bezeichnete Struktur vorgesehen, die ähnlich wie eine Kurbelschleife wirkt. Die Führungsanordnung weist zwei zueinander rechtwinklig angeordnete Langlöcher auf, in denen jeweils einer der beiden Bolzen des Antriebsradsegments gehalten beziehungsweise geführt ist. Die Langlöcher und die Bolzen sind dabei derart relativ zueinander angeordnet beziehungsweise ausgebildet, dass die Führungsanordnung sich, wenn das Antriebsradsegment durch den Elektromotor gedreht wird, linear verlagert und dadurch die lineare Kraft zum Betätigen des Hydraulikkolbens bewirkt werden kann.

Gemäß einer Ausführungsform der Erfindung sind die beiden Langlöcher derart ausgebildet und die beiden Bolzen derart angeordnet, dass in einer Extremalposition des Antriebsradsegments die beiden Bolzen entlang einer Richtung, in der die Führungsanordnung beim Drehen des Antriebsradsegments linear verlagert wird, hintereinander angeordnet sind.

Unter einer Extremalposition des Antriebsradsegments kann hierbei eine Position verstanden werden, in die das Antriebsradsegment von dem Elektromotor bei normalem Betrieb maximal verfahren werden kann, über die das Antriebsradsegment jedoch nicht hinaus bewegt wird. Beispielsweise kann eine Extremalposition des Antriebsradsegments eingenommen werden, wenn die Kupplung vollständig ausgekuppelt werden soll. In einer solchen vollständig ausgekuppelten Extremalposition des Antriebsradsegments sollen die beiden Bolzen dann entlang einer Linie hintereinander angeordnet sein, wobei die Linie im Wesentlichen mit der Betätigungsrichtung des Hydraulikkolbens übereinstimmt.

Da die beiden Langlöcher, in denen die zwei Bolzen geführt sind, rechtwinklig zueinander angeordnet sind, kann hierdurch erreicht werden, dass beispielsweise bei einem Defekt des Elektromotors eine vollständig ausgekuppelte Kupplung nicht ungesteuert von alleine wieder einkuppelt. Stattdessen befindet sich die Führungsanordnung bei einer solchen Extremalposition des Antriebsradsegments in einer Art selbst-blockierender Konfiguration, aus der sie sich ohne gezieltes Betätigen des Elektromotors nicht von alleine herausbewegen kann.

Hierdurch kann beispielsweise verhindert werden, dass eine elektrisch betätigbare Kupplung bei einem Ausfall oder eines Fehlers des Elektromotors oder dessen Ansteuerung willkürlich einkuppelt und das Fahrzeug, eventuell entgegen dem Wunsch des Fahrers, ungesteuert in Bewegung versetzt wird.

Gemäß einer Ausführungsform der Erfindung ist ein Abstand zwischen dem ersten und dem zweiten Bolzen größer als zwischen dem ersten Bolzen und der Zahnung.

Hierdurch kann erreicht werden, dass eine von dem Elektromotor auf die Zahnung und dann auf das Antriebsradsegment ausgeübte Kraft über den zwischen dem ersten und dem zweiten Bolzen wirkenden vergrößerten Hebel verstärkt auf die Führungsanordnung ausgeübt wird.

Gemäß einer Ausführungsform der Erfindung ist die Führungsanordnung mit zwei Schenkeln ausgebildet, zwischen denen das Antriebsradsegment aufgenommen ist. Jeder der beiden Schenkel weist ein erstes und ein zweites Langloch auf, die jeweils rechtwinklig zueinander angeordnet sind. Der erste Bolzen ist dabei in den beiden ersten Langlöchern geführt und der zweite Bolzen ist in den beiden zweiten Langlöchern geführt.

Eine solche Ausgestaltung der Führungsanordnung mit zwei sich gegenüber liegenden Schenkeln, zwischen denen das Antriebsradsegment aufgenommen ist, kann für eine gleichmäßige Kraftverteilung innerhalb der Kraftübertragungsanordnung und insbesondere beim Übertragen von Kräften von dem Antriebsradsegment auf die Führungsanordnung sorgen. Die auf das Antriebsradsegment wirkende Kraft kann an dessen beiden Seiten symmetrisch auf die beiden Schenkel der Führungsanordnung wirken. Ein Risiko, dass die Führungsanordnung während ihrer linearen Betätigung verkantet, wird somit minimiert.

Gemäß einer Ausführungsform ist die Führungsanordnung mit wenigstens einem Stanzbiegeteil ausgeführt.

Beispielsweise kann die Führungsanordnung mit einem oder mehreren Blechen, insbesondere Metallblechen, ausgebildet werden, die durch Stanzen und Biegen in eine geeignete Form gebracht werden können. Dabei können insbesondere die Langlöcher geeignet ausgestanzt werden. Ein solches Stanzbiegeteil ist einfach und kostengünstig herstellbar.

Gemäß einer Ausführungsform der Erfindung ist an einer Welle des Elektromotors eine Schnecke angeordnet und das Antriebsradsegment ist als Schneckenradsegment ausgebildet, dessen Zahnung in Eingriff mit der Schnecke steht.

Indem das von dem Elektromotor bewirkte Drehmoment mithilfe einer Schnecke auf das als Schneckenradsegment ausgebildete Antriebsradsegment übertragen wird, kann zusätzlich vermieden werden, dass sich das Antriebsradsegment beispielsweise bei einem Ausfall des Elektromotors ungewollt selbsttätig verdreht. Eine Kraftübertragung von dem Elektromotor auf das Antriebsradsegment ist durch Drehen der Schnecke typischerweise einfach möglich, wohingegen bei umgekehrter Kraftübertragung von dem Schneckenradsegment auf die Schnecke die Schnecke kaum gedreht werden kann, wodurch sich die beschriebene Vorrichtung bei Ausfall des Elektromotors weitgehend selbst blockiert.

Gemäß einer alternativen Ausführungsform der Erfindung ist an der Welle des Elektromotors ein Zahnrad angeordnet, wobei das Antriebsradsegment als Zahnradsegment ausgebildet ist, dessen Zahnung mit dem Zahnrad in Eingriff steht.

Das an der Welle des Elektromotors vorgesehene Zahnrad kann dabei einen wesentlich kleineren Radius aufweisen als der Radius des Zahnradsegments, welcher dem Abstand zwischen der Zahnung und dem lagernden ersten Bolzen entspricht, so dass es bei der Kraftübertragung von dem Elektromotor auf das Zahnradsegment zu einer Kraftübersetzung kommt.

Generell kann bei Ausführungsformen der Erfindung vorgesehen sein, dass die Kraftübertragungsanordnung dazu ausgebildet ist, die vom Elektromotor bewirkte Kraft mit einer Übersetzung auf den Hydraulikkolben zu übertragen.

Neben einer Ausgestaltung mit einem kleinen Zahnrad an der Welle des Elektromotors und einem größeren Radius des Zahnradsegments an dem Antriebsradsegment können auch andere Anordnungen zu einer Kraftübersetzung genutzt werden. Beispielsweise können bei der oben beschriebenen Ausführungsform mit einer Schnecke und einem Schneckenradsegment die Schnecke mit einer geeigneten Steigung ausgebildet werden, so dass es zu einer Kraftübersetzung kommt.

Gemäß einer Ausführungsform der Erfindung ist die Führungsanordnung mittels eines zusätzlichen in einem Zylinder geführten Kolbens linear geführt.

Der zusätzliche Zylinder kann dabei derart angeordnet und ausgestaltet sein, dass sich der darin geführte Kolben im Wesentlichen linear entlang der gleichen Richtung bewegen kann, wie der in dem Hydraulikzylinder geführte Hydraulikkolben. Hierdurch kann zusätzlich unterstützt werden, dass sich der von der Kraftübertragungsanordnung zu betätigende Hydraulikkolben während einer Kraftbeaufschlagung nicht verkantet.

Ausführungsformen der vorangehend beschriebenen Vorrichtung können insbesondere in einer elektrisch betätigbaren Kupplung für Kraftfahrzeuge vorteilhaft eingesetzt werden. Die Ausgestaltung der Kraftübertragungsanordnung kann hierbei für eine geeignete Kraftübertragung von dem Elektromotor auf den Hydraulikkolben sorgen. Die mit dem Hydraulikkolben mechanisch gekoppelte Führungsanordnung der Kraftübertragungsanordnung sowie das zum Verlagern der Führungsanordnung eingesetzte Antriebsradsegment mit seinen beiden Bolzen können dabei derart zusammen wirken, dass der Elektromotor das Antriebsradsegment zunächst mit geringer Kraft schnell verlagern kann und dann bei zunehmender Betätigung des Hydraulikkolbens, das heißt bei zunehmender Betätigung der hiermit gekoppelten Kupplung, eine Kraftübersetzung zunimmt, so dass die mechanisch vorgespannte Kupplung mit einer ausreichend hohen Kraft linear beaufschlagt werden kann und ausgerückt werden kann.

In einer Extremalposition, bei der die Kupplung vollständig ausgekuppelt ist, kann die beschriebene Vorrichtung aufgrund ihrer speziellen Ausgestaltung der Führungsanordnung und der speziellen Anordnung der ersten und zweiten Bolzen derart wirken, dass bei einem Ausfall des Elektromotors kein ungesteuertes Einkuppeln der Kupplung auftritt, sondern sich die Vorrichtung vorzugsweise selbst blockiert. Auf diese Weise können beispielsweise Unfälle, wie sie durch ein ungewolltes Einkuppeln einer elektrisch betätigbaren Kupplung bewirkt werden könnten, vermieden werden.

Es wird darauf hingewiesen, dass mögliche Merkmale und Vorteile von Ausführungsformen der Erfindung hierin teilweise mit Bezug auf eine Vorrichtung zum Betätigen eines Hydraulikkolbens und teilweise mit Bezug auf eine elektrisch betätigbare Kupplung für ein Kraftfahrzeug beschrieben sind. Ein Fachmann erkennt, dass die verschiedenen Merkmale in geeigneter Weise kombiniert oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die Zeichnungen beschrieben, wobei weder die Beschreibung noch die Zeichnungen als die Erfindung einschränkend auszulegen sind.
Figur 1 zeigt ein Kupplungssystem für ein Fahrzeug mit einer elektrisch betätigbaren Kupplung gemäß einer Ausführungsform der Erfindung.
Figuren 2, 3, 4 zeigen eine perspektivische Ansicht, eine Seitenansicht, sowie eine Draufsicht von oben einer erfindungsgemäßen Vorrichtung zum Betätigen eines Hydraulikkolbens in einem ausgekuppelten Zustand.
Figuren 5, 6, 7 zeigen eine perspektivische Ansicht, eine Seitenansicht, und eine Draufsicht von oben der in den Figuren 2, 3, 4 dargestellten Vorrichtung in einem eingekuppelten Zustand.
Figuren 8 und 9 zeigen perspektivische Ansichten einer alternativen erfindungsgemäßen Vorrichtung zum Betätigen eines Hydraulikkolbens in einem ausgekuppelten und einem eingekuppelten Zustand.

Die Figuren sind lediglich schematisch und nicht maßstabsgetreu. Gleiche Bezugszeichen bezeichnen gleiche oder gleichwirkende Merkmale.

### Ausführungsformen der Erfindung

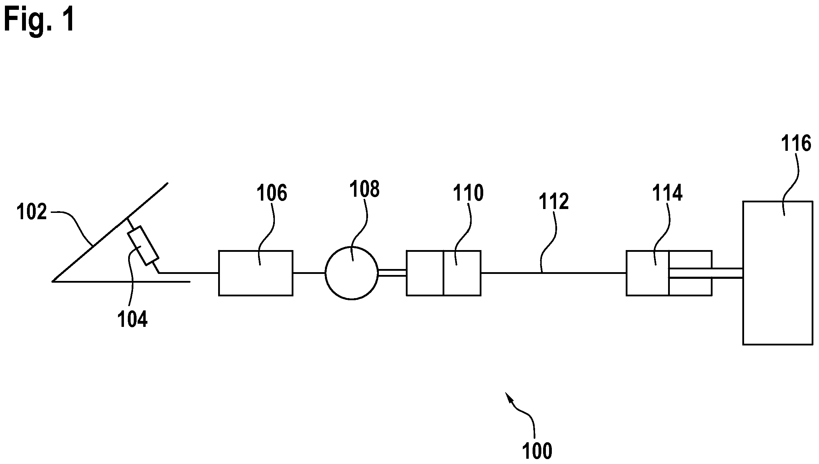

Anhand von Figur 1 wird zunächst die Wirkungsweise eines Kupplungssystems in einem Kraftfahrzeug mit einer elektrisch betätigbaren Kupplung erklärt.

Das Kupplungssystem 100 weist ein Pedal 102 auf, welches von einem Fahrer betätigt werden kann. Ein Sensor 104 erfasst die Position des Pedals 102 und leitet ein entsprechendes Signal an ein Steuergerät 106 weiter. Das Steuergerät 106 steuert daraufhin einen Elektromotor 108 an, mithilfe dessen ein Geberzylinder 110 eines Hydrauliksystems betätigt wird. Eine in dem Geberzylinder 110 unter Druck gesetzte Hydraulikflüssigkeit wird über eine Leitung 112 an einen Nehmerzylinder 114 weiter geleitet, wodurch dort ein weiterer Hydraulikkolben verlagert werden kann. Dieser Hydraulikkolben ist über ein Gestänge mit einem Ausrückmechanismus einer Kupplung 116 gekoppelt. Je nach Betätigung des Kupplungspedals 102 kann somit die elektrisch betätigbare Kupplung derart betätigt werden, dass diese entweder eingekuppelt oder ausgekuppelt oder gegebenenfalls vorübergehend in einem schleifenden Zustand gehalten wird.

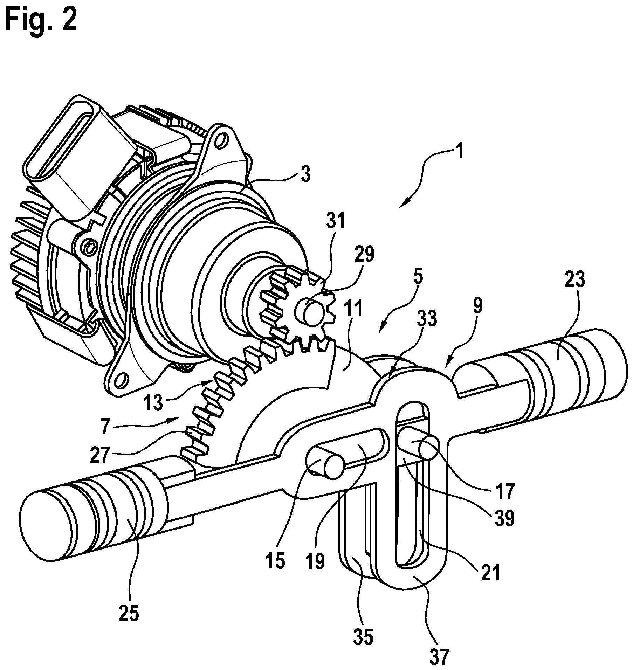

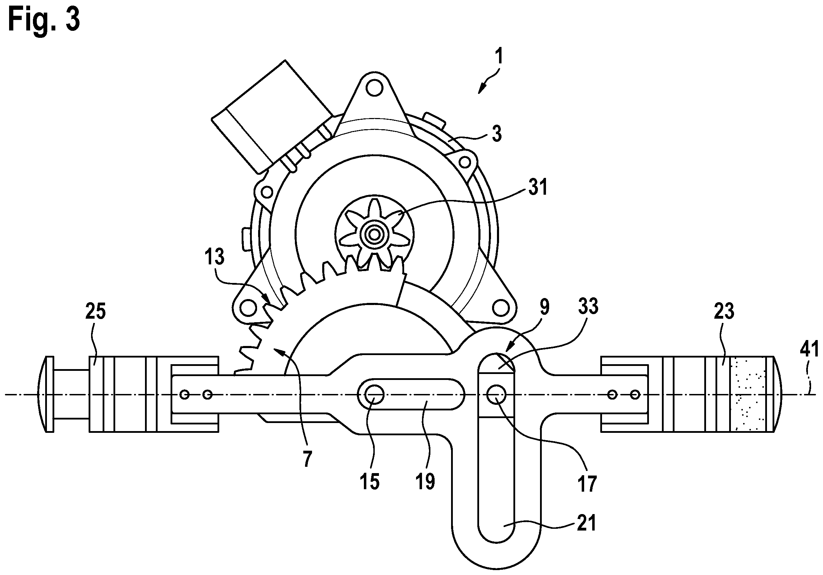

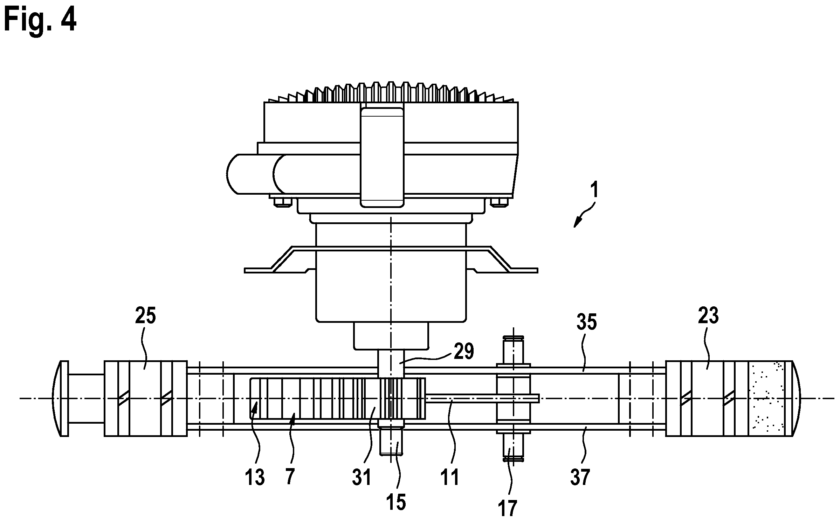

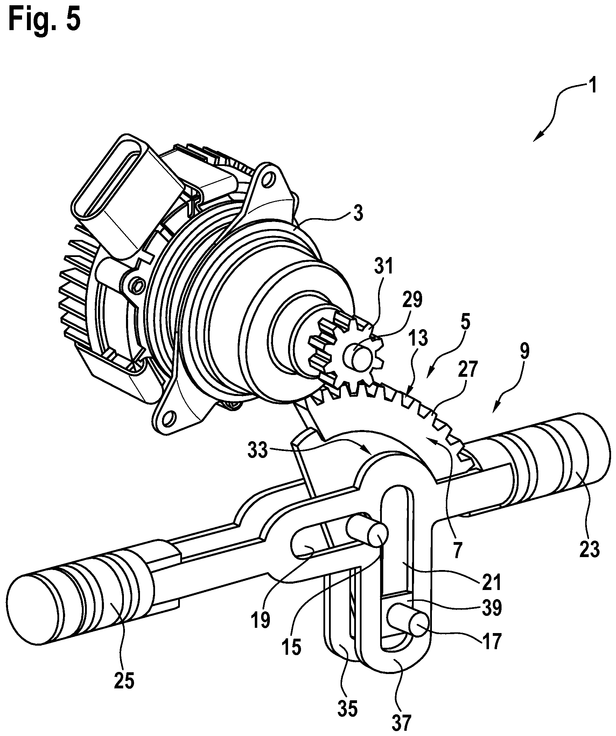

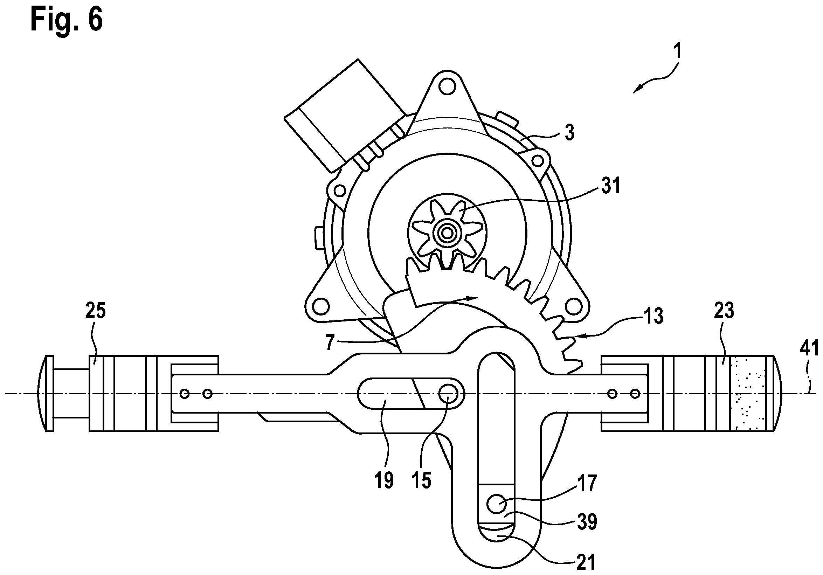

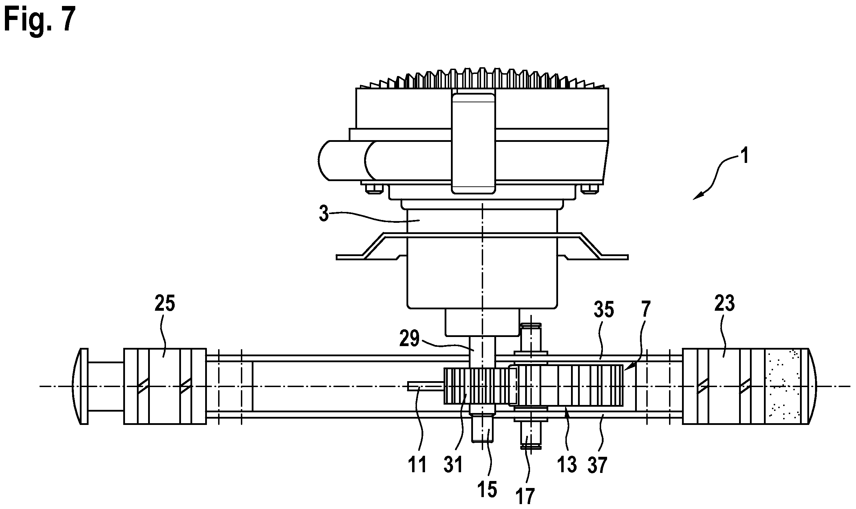

Mit Bezug auf die Figuren 2 bis 7 wird nun eine erste Ausführungsform einer Vorrichtung zum Betätigen eines Hydraulikkolbens für eine elektrisch betätigbare Kupplung einerseits im ausgekuppelten Zustand (Figuren 2 bis 4) und andererseits im eingekuppelten Zustand (Figuren 5 bis 7) beschrieben.

Die Vorrichtung 1 verfügt über einen Elektromotor 3 und eine Kraftübertragungsanordnung 5. Die Kraftübertragungsanordnung 5 weist ein Antriebsradsegment 7 sowie eine Führungsanordnung 9 auf. Das Antriebsradsegment 7 ist im dargestellten Beispiel ein näherungsweise halbkreisförmiges Bauteil 11, welches zumindest entlang eines Viertelkreises an seinem Außenumfang eine Zahnung 13 aufweist.

Im dargestellten Beispiel ist das Antriebsradsegment 7 als Zahnradsegment ausgebildet, wobei die Zähne 27 der Zahnung 13 mit Zähnen eines kleineren Zahnrads 31, welches an einer Welle 29 des Elektromotors 3 vorgesehen ist, in Eingriff stehen.

Das Antriebsradsegment 7 ist um einen ersten Bolzen 15 herum drehbar gelagert. Der erste Bolzen 15 kann hierbei ortsfest angeordnet sein. Durch den Elektromotor 3 kann das Antriebsradsegment 7 somit um den ersten Bolzen 15 herum gedreht werden.

An einem Hebelarm 33 weist das Antriebsradsegment 7 ferner einen zweiten Bolzen 17 auf. Dieser zweite Bolzen 17 ist von dem ersten Bolzen 15 beabstandet, vorzugsweise mit einem Abstand, der größer ist als der Radius des Antriebsradsegments 7 einschließlich der daran vorgesehenen Zahnung 13.

Die Führungsanordnung 9 ist mithilfe zweier in Form gestanzter Bleche, die zwei Schenkel 35, 37 bilden, ausgebildet. In jedem dieser Schenkel 35, 37 der Führungsanordnung 9 ist jeweils ein erstes Langloch 19 und ein zweites Langloch 21 ausgebildet. Die beiden Langlöcher 19, 21 sind rechtwinklig zueinander angeordnet. Der erste Bolzen 15 verläuft dabei durch die beiden ersten Langlöcher 19, wohingegen der zweite Bolzen 17 innerhalb der zweiten Langlöcher 21 angeordnet ist und sich mithilfe von Gleitsteinen 39 innerhalb der zweiten Langlöcher 21 verschieben lässt. Die Schenkel 35, 37 der Führungsanordnung 9 sind jeweils mit einem Hydraulikkolben 23 eines Hydrauliksystems für eine elektrisch betätigbare Kupplung mechanisch verbunden. An einer gegenüberliegenden Seite sind die Schenkel 35, 37 der Führungsanordnung 9 mit einem weiteren Führungskolben 25 mechanisch verbunden.

Die beschriebene Vorrichtung 1 kann dazu dienen, eine von dem Motor 3 bewirkte Drehbewegung in eine auf den Hydraulikkolben 23 wirkende lineare Bewegung umzuwandeln. Durch die unterschiedlichen Radien des an der Welle 29 des Elektromotors 13 vorgesehenen Zahnrades 31 einerseits und der an dem Antriebsradsegment 7 vorgesehenen Zahnung 13 andererseits kann eine Kraftübersetzung bewirkt werden.

Durch den an dem Antriebsradsegment 7 vorgesehenen Hebelarm 33 kann ein bewirktes Drehmoment weiter erhöht werden. Ein solches erhöhtes Drehmoment kann benötigt werden, um den von dem Hydraulikkolben 23 betätigten Geberzylinder eines Kupplungshydrauliksystems mit ausreichend großer Kraft ansteuern zu können.

Durch eine geschickte Anordnung der beiden Bolzen 15, 17 beziehungsweise des Hebelarms 33 einerseits und der beiden Langlöcher 19, 21 andererseits kann erreicht werden, dass zum Beispiel beim Auskuppeln zuerst eine schnellere Bewegung und dann eine kraftvollere Bewegung des Hydraulikkolbens 23 bewirkt wird. Dies kann den großen Vorteil haben, dass der Geberzylinder des Hydrauliksystems schnell angesteuert werden kann, um Hydrauliköl schnell auszuschieben und unter Druck zu setzen. Ist das Hydrauliköl unter Druck, benötigt der Geberzylinder eine größere Kraft, um das Öl in den Nehmerzylinder zu pressen.

Ein weiterer Vorteil der Vorrichtung 1 ist darin zu sehen, dass aufgrund der gezielten Anordnung der beiden Langlöcher 19, 21 und der darin geführten Bolzen 15, 17 eine selbsttätige Sperrung der damit betätigten Kupplung in einem ausgekuppelten Zustand erreicht werden kann. In der in den Figuren 2 bis 4 dargestellten Extremalposition eines ausgekuppelten Zustands sind die beiden Bolzen 15, 17 entlang der Richtung 41, in der die Führungsanordnung 9 beim Drehen des Antriebsradsegments 7 linear verlagert wird, hintereinander angeordnet. Eine von dem Hydraulikkolben 23 auf die Führungsanordnung 9 ausgeübte Schubkraft kann in dieser Extremalposition kein Drehmoment auf das Antriebsradsegment 7 bewirken, so dass sich dieses selbst bei Ausfall des Elektromotors 3 nicht ungewollt selbsttätig drehen kann. Dies kann den Vorteil haben, dass im Falle eines Systemausfalls die von der Vorrichtung 1 betätigte Kupplung geöffnet bleibt und somit das Kraftfahrzeug nicht ungewollt "einen Satz nach vorne macht.

Durch den zusätzlich vorgesehenen Führungskolben 25 kann eine Seitenkraft auf den Hydraulikkolben 23 bei dessen Betätigung zusätzlich minimiert werden.

Hierdurch kann ein ausgeglicheneres System erzielt werden, was den Vorteil einer Seitenkraftminimierung des Kolbens im Geberzylinder zur Folge haben kann. Diese Seitenkraftminimierung wird durch die Verwendung von zwei die Schenkel 35, 37 bildenden Führungsblechen noch verstärkt.

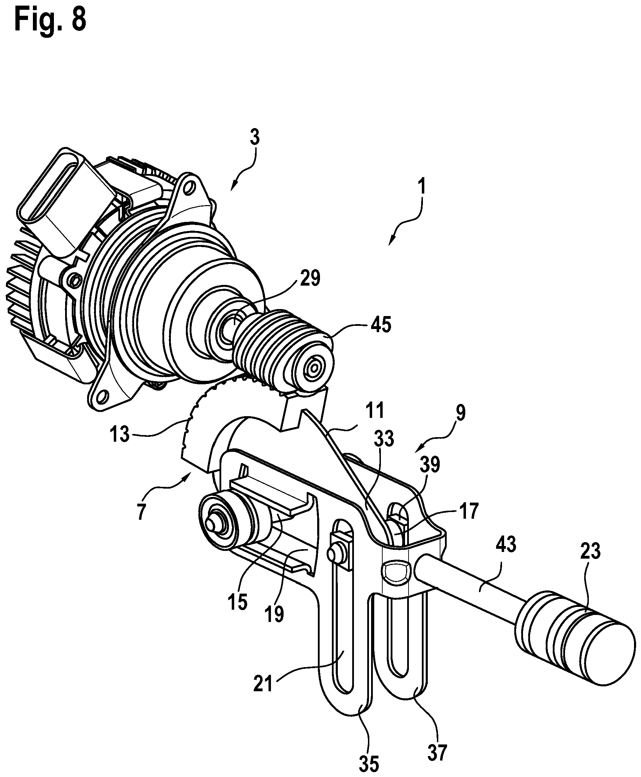

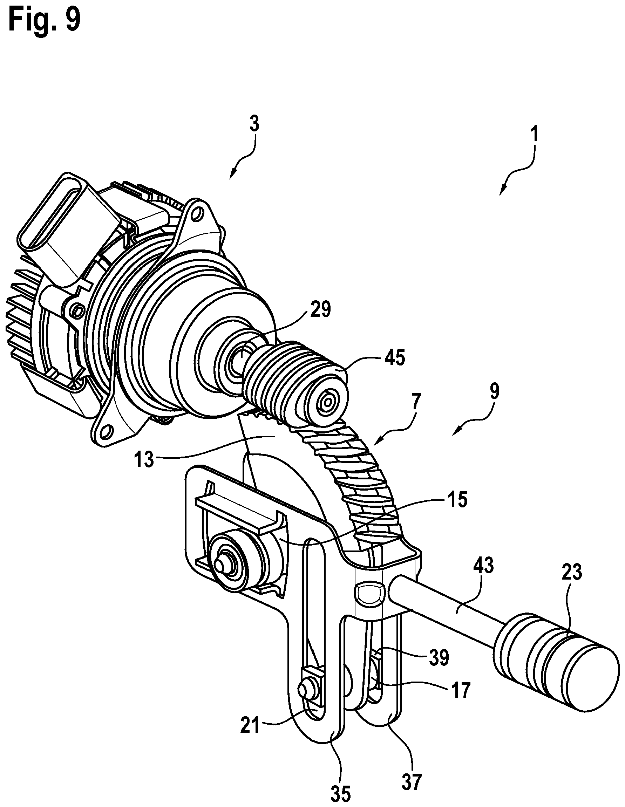

In den Figuren 8 und 9 ist eine alternative Ausführungsform der Vorrichtung 1 in einem ausgekuppelten Zustand (Figur 8) und in einem eingekuppelten Zustand (Figur 9) dargestellt.

Bei dieser Ausführungsform wurde auf einen Führungskolben 25 verzichtet. Die beiden Schenkel 35, 37 der Führungsanordnung 9 sind Bestandteil eines einzigen, U-förmigen Stanzbiegeteils. An einer Stirnfläche dieser Führungsanordnung 9 ist eine Stange 43 vorgesehen, die mit dem Hydraulikkolben 23 verbunden ist und diesen in linearer Richtung betätigt.

Bei dieser Ausführungsform ist ferner an der Welle 29 des Motors 3 statt eines Zahnrades eine Schnecke 45 vorgesehen, die mit einer Zahnung 13 eines als Schneckenradsegment ausgebildeten Antriebsradsegments 7 zusammen wirkt.

## Patentansprüche

1. Vorrichtung (1) zum Betätigen eines Hydraulikkolbens (23) für eine elektrisch betätigbare Kupplung (100), wobei die Vorrichtung aufweist:
einen Elektromotor (3);
eine Kraftübertragungsanordnung (5), um eine von dem Elektromotor (3) bewirkte Kraft als linear wirkende Kraft zum Betätigen des Hydraulikkolbens (23) zu übertragen;
wobei die Kraftübertragungsanordnung (5) aufweist:
ein Antriebsradsegment (7) mit einer an dessen Umfang angeordneten Zahnung (13) und mit einem ersten Bolzen (15) und zu dem ersten Bolzen (15) beabstandeten zweiten Bolzen (17),
eine Führungsanordnung (9), welche ein erstes und ein zweites Langloch (19, 21) aufweist,
wobei der erste Bolzen (15) in dem ersten Langloch (19) geführt ist und der zweite Bolzen (17) in dem zweiten Langloch (21) geführt ist, derart, dass sich die Führungsanordnung (9) bei Drehen des Antriebsradsegments (7) linear verlagert,
**dadurch gekennzeichnet, dass**
das Antriebsradsegment (7) um einen ersten Bolzen (15) drehbar gelagert ist und dass das erste (19) und das zweite Langloch (21) zueinander rechtwinklig angeordnet sind.

2. Vorrichtung nach Anspruch 1, wobei die beiden Langlöcher (19, 21) derart ausgebildet sind und die beiden Bolzen (15, 17) derart angeordnet sind, dass in einer Extremalposition des Antriebsradsegments (7) die beiden Bolzen (15, 17) entlang einer Richtung (41), in der die Führungsanordnung (9) bei Drehen des Antriebsradsegments (7) linear verlagert wird, hintereinander angeordnet sind.

3. Vorrichtung nach Anspruch 1 oder 2, wobei ein Abstand zwischen dem ersten und dem zweiten Bolzen (15, 17) größer ist als ein Abstand zwischen dem ersten Bolzen (15) und der Zahnung (13).

4. Vorrichtung nach einem der Ansprüche 1 bis 3, wobei die Führungsanordnung (9) mit zwei Schenkeln (35, 37) ausgebildet ist, zwischen welchen das Antriebsradsegment (7) aufgenommen ist, wobei jeder der beiden Schenkel (35, 37) ein erstes und ein zweites Langloch (19, 21) aufweist, die zueinander rechtwinklig angeordnet sind, und wobei der erste Bolzen (15) in den beiden ersten Langlöchern (19) geführt ist und der zweite Bolzen (17) in den beiden zweiten Langlöchern (21) geführt ist.

5. Vorrichtung nach einem der Ansprüche 1 bis 4, wobei die Führungsanordnung (9) mit wenigstens einem Stanzbiegeteil ausgeführt ist.

6. Vorrichtung nach einem der Ansprüche 1 bis 5, wobei an einer Welle (29) des Elektromotors (3) eine Schnecke (45) angeordnet ist und wobei das Antriebsradsegment (7) als Schneckenradsegment ausgebildet ist, dessen Zahnung (13) mit der Schnecke (45) in Eingriff steht.

7. Vorrichtung nach einem der Ansprüche 1 bis 5, wobei an einer Welle (29) des Elektromotors (3) ein Zahnrad (31) angeordnet ist und wobei das Antriebsradsegment (7) als Zahnradsegment ausgebildet ist, dessen Zahnung (7) mit dem Zahnrad (31) in Eingriff steht.

8. Vorrichtung nach einem der Ansprüche 1 bis 7, wobei die Kraftübertragungsanordnung (5) dazu ausgebildet ist, die vom Elektromotor (3) bewirkte Kraft mit einer Kraftübersetzung auf den Hydraulikkolben (23) zu übertragen.

9. Vorrichtung nach einem der Ansprüche 1 bis 8, wobei die Führungsanordnung (9) mittels eines in einem Führungszylinder geführten zusätzlichen Kolbens (25) linear geführt ist.

10. Elektrisch betätigbare Kupplung (100) für eine Kraftfahrzeug, aufweisend eine Vorrichtung (1) gemäß einem der Ansprüche 1 bis 9.

## Claims

1. Apparatus (1) for actuating a hydraulic piston (23) for an electrically actuable clutch (100), the apparatus having:
an electric motor (3);
a force transmission arrangement (5), for transmitting a force which is brought about by the electric motor (3) as a linearly acting force for actuating the hydraulic piston (23);
the force transmission arrangement (5) having:
a drive wheel segment (7) with a toothing system (13) which is arranged on its circumference, and with a first pin (15) and second pins (17) which are spaced apart from the first pin (15),
a guide arrangement (9) which has a first and a second slot (19, 21),
the first pin (15) being guided in the first slot (19) and the second pin (17) being guided in the second slot (21), in such a way that the guide arrangement (9) is moved linearly during rotation of the drive wheel segment (7),
**characterized in that**
the drive wheel segment (7) is mounted such that it can be rotated about a first pin (15), and **in that** the first (19) and the second slot (21) are arranged at a right angle with respect to one another.

2. Apparatus according to Claim 1, the two slots (19, 21) being configured in such a way and the two pins (15, 17) being arranged in such a way that, in an extremal position of the drive wheel segment (7), the two pins (15, 17) are arranged behind one another along a direction (41), in which the guide arrangement (9) is moved linearly during rotation of the drive wheel segment (7).

3. Apparatus according to Claim 1 or 2, a spacing between the first and the second pin (15, 17) being greater than a spacing between the first pin (15) and the toothing system (13).

4. Apparatus according to one of Claims 1 to 3, the guide arrangement (9) being configured with two limbs (35, 37), between which the drive wheel segment (7) is received, each of the two limbs (35, 37) having a first and a second slot (19, 21) which are arranged at a right angle with respect to one another, and the first pin (15) being guided in the two first slots (19) and the second pin (17) being guided in the two second slots (21).

5. Apparatus according to one of Claims 1 to 4, the guide arrangement (9) being configured with at least one stamped bent part.

6. Apparatus according to one of Claims 1 to 5, a worm (45) being arranged on a shaft (29) of the electric motor (3), and the drive wheel segment (7) being configured as a worm gear segment, the toothing system (13) of which is in engagement with the worm (45).

7. Apparatus according to one of Claims 1 to 5, a gearwheel (31) being arranged on a shaft (29) of the electric motor (3), and the drive wheel segment (7) being configured as a gearwheel segment, the toothing system (7) of which is in engagement with the gearwheel (31).

8. Apparatus according to one of Claims 1 to 7, the force transmission arrangement (5) being configured to transmit the force which is brought about by the electric motor (3) to the hydraulic piston (23) with a force transmission ratio.

9. Apparatus according to one of Claims 1 to 8, the guide arrangement (9) being guided linearly by means of an additional piston (25) which is guided in a guide cylinder.

10. Electrically actuable clutch (100) for a motor vehicle, having an apparatus (1) according to one of Claims 1 to 9.

## Revendications

1. Dispositif (1) pour l'actionnement d'un piston hydraulique (23) pour un accouplement à commande électrique (100), le dispositif présentant :
un moteur électrique (3) ;
un agencement de transfert de force (5) pour transférer une force générée par le moteur électrique (3) sous forme de force agissant linéairement pour l'actionnement du piston hydraulique (23) ;
l'agencement de transfert de force (5) présentant :
un segment de roue d'entraînement (7) avec une denture (13) disposée au niveau de sa périphérie et avec un premier boulon (15) et un deuxième boulon (17) espacé du premier boulon (15),
un agencement de guidage (9) qui présente un premier et un deuxième trou oblong (19, 21),
le premier boulon (15) étant guidé dans le premier trou oblong (19) et le deuxième boulon (17) étant guidé dans le deuxième trou oblong (21), de telle sorte que l'agencement de guidage (9) se déplace linéairement lors de la rotation du segment de roue d'entraînement (7),
**caractérisé en ce que**
le segment de roue d'entraînement (7) est supporté à rotation autour d'un premier boulon (15) et **en ce que** le premier (19) et le deuxième trou oblong (21) sont disposés à angle droit l'un par rapport à l'autre.

2. Dispositif selon la revendication 1, dans lequel les deux trous oblongs (19, 21) sont réalisés de telle sorte, et les deux boulons (15, 17) sont disposés de telle sorte, que dans une position extrême du segment de roue d'entraînement (7), les deux boulons (15, 17) soient disposés l'un derrière l'autre le long d'une direction (41) dans laquelle l'agencement de guidage (9) est déplacé linéairement lors de la rotation du segment de roue d'entraînement (7).

3. Dispositif selon la revendication 1 ou 2, dans lequel une distance entre le premier et le deuxième boulon (15, 17) est supérieure à une distance entre le premier boulon (15) et la denture (13).

4. Dispositif selon l'une quelconque des revendications 1 à 3, dans lequel l'agencement de guidage (9) est réalisé avec deux branches (35, 37) entre lesquelles est reçu le segment de roue d'entraînement (7), chacune des deux branches (35, 37) présentant un premier et un deuxième trou oblong (19, 21), lesquels trous oblongs sont disposés à angle droit l'un par rapport à l'autre, et le premier boulon (15) étant guidé dans les deux premiers trous oblongs (19) et le deuxième boulon (17) étant guidé dans les deux deuxièmes trous oblongs (21).

5. Dispositif selon l'une quelconque des revendications 1 à 4, dans lequel l'agencement de guidage (9) est réalisé avec au moins une pièce estampée-cintrée.

6. Dispositif selon l'une quelconque des revendications 1 à 5, dans lequel une vis sans fin (45) est disposée sur un arbre (29) du moteur électrique (3) et le segment de roue d'entraînement (7) est réalisé sous forme de segment de roue à denture hélicoïdale, dont la denture (13) est en prise avec la vis sans fin (45).

7. Dispositif selon l'une quelconque des revendications 1 à 5, dans lequel une roue dentée (31) est disposée sur un arbre (29) du moteur électrique (3) et dans lequel le segment de roue d'entraînement (7) est réalisé sous forme de segment de roue dentée, dont la denture (7) est en prise avec la roue dentée (31).

8. Dispositif selon l'une quelconque des revendications 1 à 7, dans lequel l'agencement de transfert de force (5) est réalisé de manière à transmettre la force générée par le moteur électrique (3) avec une démultiplication de force au piston hydraulique (23).

9. Dispositif selon l'une quelconque des revendications 1 à 8, dans lequel l'agencement de guidage (9) est guidé de manière linéaire au moyen d'un piston supplémentaire (25) guidé dans un cylindre de guidage.

10. Accouplement à commande électrique (100) pour un véhicule automobile, présentant un dispositif (1) selon l'une quelconque des revendications 1 à 9.
